# EUROPEAN PATENT SPECIFICATION

(11) **EP 0 858 637 B1**
(45) Date of publication and mention of the grant of the patent: **11.09.2002**
(21) Application number: 96934854.9
(22) Date of filing: 25.10.1996
(51) Int. Cl.: G06K 9/22, G06F 17/28, H04N 1/107, G06K 9/60

(54) **SCANNING AND INTERPRETATION DEVICE AND METHOD FOR READING AND INTERPRETING SIGNS AND CHARACTERS**
GERÄT UND VERFAHREN ZUM ABTASTEN UND INTERPRETIEREN FÜR DAS LESEN UND INTERPRETIEREN VON ZEICHEN UND BUCHSTABEN
DISPOSITIF D'ANALYSE ET D'INTERPRETATION ET PROCEDE DE LECTURE ET D'INTERPRETATION DE SIGNES ET CARACTERES

(30) Priority: 27.10.1995 FI 955115; 22.03.1996 FI 961332
(43) Date of publication of application: 19.08.1998
(73) Proprietor: Licentia OY, 00130 Helsinki (FI)
(72) Inventor: KOHOLA, Pekka, FIN-02180 Espoo (FI)
(74) Representative: Tanhua, Pekka Vilhelm
(86) International application number: FI9600567
(87) International publication number: WO97015896

(56) References cited:
- DE-A- 4 124 939
- GB-A- 2 280 329
- US-A- 4 890 230
- US-A- 5 063 508
- US-A- 5 301 243

## Description

The present invention relates to a scanning and interpretation device according to the preamble of patent claim 1.

Moreover, the present invention relates to a method for reading and interpreting signs and characters according to the preamble of patent claim 19.

From the German utility model G 9319386.6, there is known a scanning device for reading graphic characters; in the small casing of said device there is arranged an optical scanning unit, whereby graphic characters are read optically. The scanning device can be further connected by a connection cable to an external data processing unit, to a personal computer where the scanned characters are identified and interpreted by means of a customized computer program. The identification and/or interpretation results can be presented in the display unit of the personal computer.

A problem in the above mentioned scanning device is the cumbersome structure of the case and the installation of the optical scanning unit in the case. The structure of the scanning device is ergonomically primitive: it is awkward to use. Another problem of this scanning device is the complexity of its structure and its susceptibility to malfunction. Yet another problem is the fact that the scanning device is dependent on an external computer and its programs.

In the prior art there is known, from the European patent application EP-A2-272158, an electronic dictionary including an optical reader and a translator unit. The words of the source language are read in the optical reader, and the translator unit produces equivalent words in the target language, which then are presented in a display unit. The translator unit also offers other information, for example about the usage or pronunciation of words. In a preferred embodiment, the optical reader and translator unit form a hand-held electronic dictionary. In another embodiment, the optical reader and translator unit are separate units which are connected by an interconnecting wire in order to transfer data from the optical reader to the translator unit for translation and display.

A drawback with the known electronic dictionary containing both an optical reader and a translator unit is that it is relatively big, impractical in form and cumbersome to use.

Another drawback with an electronic dictionary where the optical reader and translator unit are separate devices coupled with a connecting wire is that the translation is shown on the display of the translator unit. Even this technical solution is unhandy in use; the connecting wire disturbs the use of the electronic dictionary, and the translator unit with display must be placed in a suitable position on the worktable so that the translation could be seen as easily as possible. During translation, the user must, however, shift his eyes from the text in order to look at the translation on the display. This working method complicates a smooth scanning of the text.

Similar devices and methods as above mentioned are known from DE-A-4 124 939 and US-A-5 301 243. The first one describes a translating system in which a hand-held scanner allows the user to scan single words, which scanned word(s) is transmitted to a translation computer connected to the scanner either by a cable or by suitable wireless transmission of electrical signal there between. The scanned word is displayed at the receiving computer, and, when correct, translated into another language. The second one also describes a similar hand-held scanner capable of scanning and storing in bit-map form a plurality of written words. The scanner is connected to a computer by either a cable or infrared link. In the computer, suitable software converts the raw bit-map data into ASCII or other codes and they are displayed.

A drawback with the above-outlined two prior art documents is that the user has to turn away from the scanner to see the results at a separate display connected to the computer.

The object of the invention is to introduce a new scanning and interpretation device which is in general suited to be used as an optical scanning device, and especially, among others, as an electronic information device, such as a dictionary, but which has more user-oriented and more versatile features than the prior art scanning devices and/or electronic dictionaries, among others.

The scanning and interpretation device according to the invention is characterized by the features defined in the characterising portion of the independent claim 1.

The scanning and interpretation device according to the invention comprises two separate units, which are an input and display unit and an interpretation unit as an external device, which input and display unit is a handheld unit by means of which the scanning of the characters and the preprocessing of the read character data is carried out and which input and display unit comprises a data transfer unit having a wireless transceiver by means of which the preprocessed character data is transferred wirelessly to the interpretation unit, where characters and/or character groups, such as words, are identified and interpreted, and the identified characters and/or character groups, such as words, and the translation are transmitted wirelessly to the input and display unit to be displayed on the display unit thereof.

An advantage of the invention is that the device is ergonomic in shape, and consequently simple and easy to use. Another advantage is that the features of the device can be easily extended and modified according to the user's needs.

Further an advantage of the invention is that this kind hand-held scanning and interpretation device can be used for reading graphic characters, and their interpretation can be presented on a display provided in connection with the same device. Now the reading and interpretation of signs and characters, such as number sequences, alphanumeric codes or foreign words is carried out fluently for instance among other listed information or among a read and understood text, and frustrating interruptions do not occur in the working process.

Another advantage of the invention is that the design of the device is ergonomic and convenient for the hand. Thus the use of the device in different reading and interpretation tasks is simple and easy.

The method for reading and interpreting signs and characters according to the invention is characterized by the features defined in the characterising portion of the independent claim 19.

The scanning of the characters and the preprocessing of the read character data according to the invention is carried out in a first unit, which is held by hand, whereafter the preprocessed character data is transferred wirelessly to a second unit, where characters and/or character groups, such as words, are identified and interpreted, and the identified characters and/or character groups, such as words, and the translation are transmitted wirelessly to the first unit, where they are displayed.

An advantage of the method according to the invention is that it offers a possibility to realize the first unit, i.e. the input and display unit, as a small and compact device unit which communicates with the second unit, i.e. the interpretation unit. The preprocessed data is sent to the interpretation unit, where the data is subjected to a treatment requiring a high data processing capacity. However, the translations obtained from the interpretation unit are then transmitted to the first unit and displayed there. Thus the user operates only with the first unit and does not need to pay attention to the second unit during use.

The invention and its advantages are described in more detail below, with reference to the appended drawings, where
- figure 1: is a block diagram illustrating a device according to the invention;
- figure 2a: shows an embodiment of the device in a perspective illustration,
- figure 2b: is a top-view illustration of the embodiment of figure 2a, especially its front;
- figure 2c: is a side-view illustration of the embodiment of figure 2a, especially its front;
- figure 3: illustrates the structure of the device according to the invention in partial longitudinal cross-section;
- figure 4: illustrates the front of another device according to the invention in longitudinal cross-section;
- figure 5a: is a top-view illustration of the structure of the optical input unit; and
- figure 5b: is a side-view illustration of the optical input unit;
- figure 6: illustrates the packing of data in a device according to the invention;
- figure 7: illustrates the structure of the distance measuring unit and character base identifier included in the device;
- figure 8: is a block diagram illustrating the structure of a third device according to the invention;
- figure 9: illustrates the structure of the input unit and display unit of the device according to figure 8 in partial longitudinal cross-section; and
- figures 10a and 10b: are flowcharts illustrating the operation of a scanning and interpretation device according to the invention.

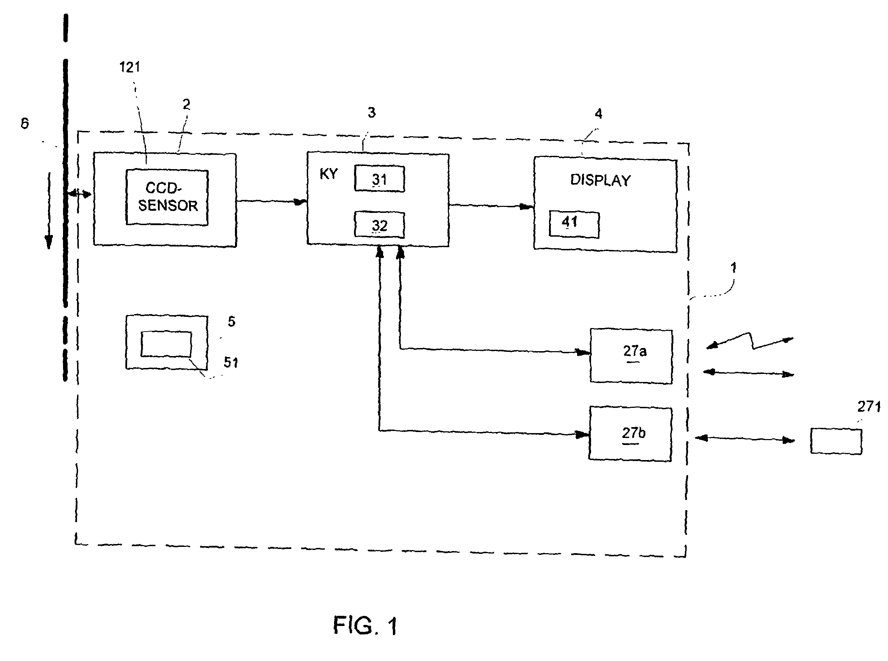

According to the block diagram of figure 1, the scanning and interpretation device 1 according to the invention comprises an optical input unit 2, a processing unit 3 and a display unit 4. In addition to this, the device 1 comprises a power source 5, advantageously incorporating an battery 51. For example graphic characters drawn on paper 6 are optically read by the input unit 2. The input unit 2 is connected to the processing unit 3. In the processing unit 3, the data received from the optical input unit 2 is preprocessed, and there are formed images of the read graphic characters; the read characters are identified and characters or character strings are possibly interpreted by means of one or more computer programs installed therein. The data processing unit 3 is further connected to the display unit 4 for displaying the identification and/or interpretation data.

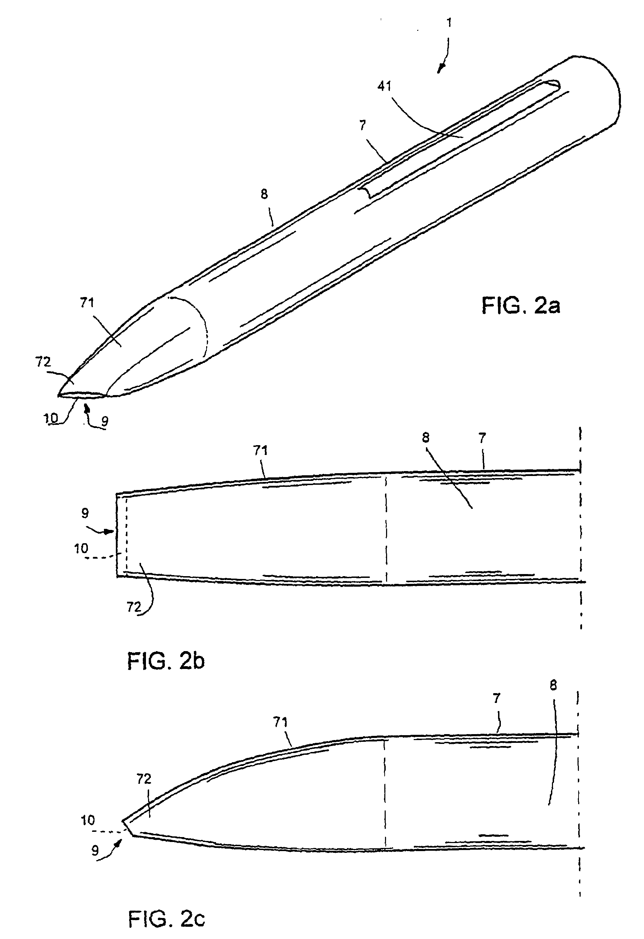

The scanning and interpretation device 1 is a small, hand-held device, as is seen from figures 2a, 2b and 2c, for instance. The device 1 comprises an oblong pen-shaped case 7. The form of the case 7 is for example an elongated cylinder or prism. The maximum diameter of the case 7 is for instance 10 - 30 mm. The length of case 7 can vary within a large scale; it is for example within the range 100 - 200 mm. In that case the device 1 can be held by hand at the case 7 and supported during use. Advantageously the case 7 includes a suitable grip surface 8, which is for instance roughened or suitably coated, so that the fingers get a good and firm grip when the device is being used.

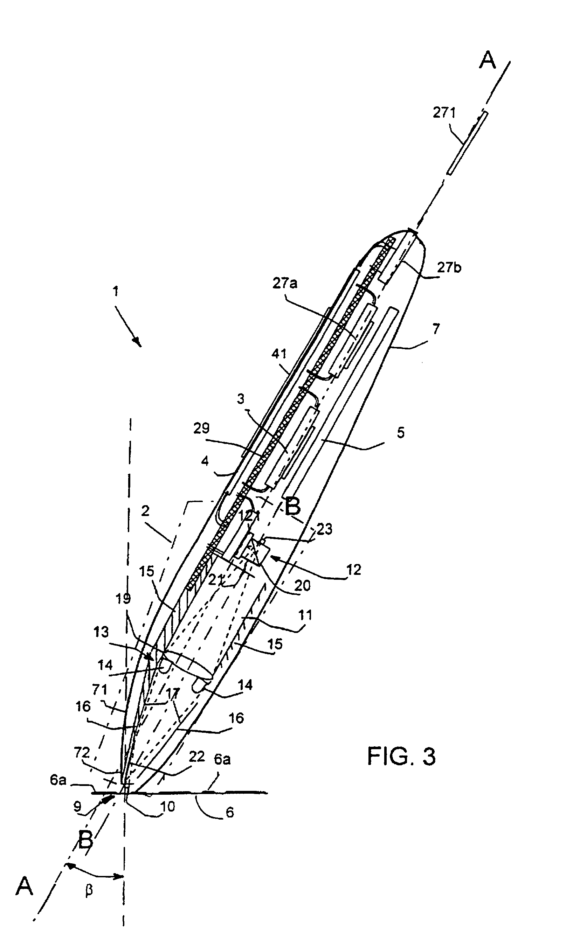

The case 7 is provided with an optical input unit 2, a processing unit 3, a display unit 4 and a power source 5, as is seen in figure 3, in the lengthwise cross-section of the device 1. The optical input unit 2 comprises a scanning hole 9, a window 10, an optics part 11, a light detector 12 and a lighting unit 13. The scanning hole 9 is arranged in the first end 72 of the case 7, and the character data is read into the device 1 through said hole 9.

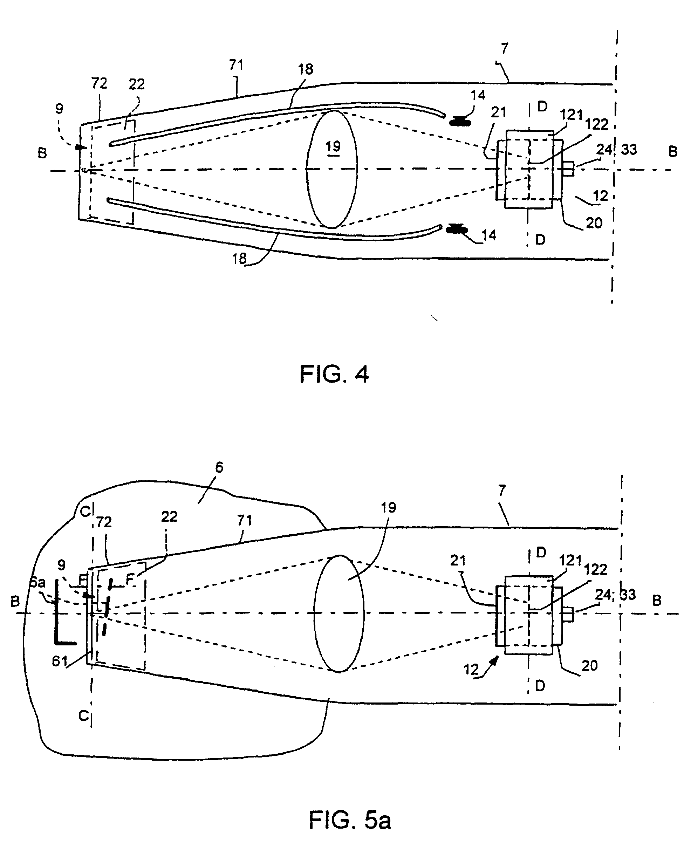

The case 7 is provided with a conical point element 71, which element narrows towards the free end of the case 7 in at least one direction transversal to the lengthwise axis A-A of the case. In connection with said element 71, there is arranged the optical input unit 2. At the end 72 of the conical element 71, there is provided an oblong scanning hole 9. In practice the point element 71 of the case is a flattened and advantageously shaped truncated cone. The scanning hole 9 is a narrow, long slot, such as a narrow rectangle or the like, as is illustrated for example in figures 2a, 2b and 2c. The width of the scanning hole 9 (direction C - C of the transversal axis, figure 5a) is for example 10 - 15 mm and height 1 - 2 mm (transversal cross direction F-F). The scanning hole 9 is advantageously provided with a window 10 which prevents dirt from entering the case 7 of the device, but allows light to go through.

An advantage of the conical element 71 provided in the case 7 is that the optical input unit 2, especially its scanning hole 9, can easily be focused to the section to be read, for instance to a single word or number sequence, in order to read the same.

The lighting unit 13 of the optical input unit 2 comprises one or more light emitting diodes (LED) 14. The embodiment of figure 3 includes two light emitting diodes 14, and they are advantageously arranged in connection to the optics part 11, so that their light does not directly enter the light detector 12 but is focused to the scanning hole 9, towards the scanning surface arranged therein, i.e. to the character 6a to be read and to its surrounding and background material, such as paper 6. The light emitting diode 14 is connected to the processing unit 3. The operation of the light emitting diode 14 is controlled so that it is given a current pulse, the length of which is adjusted in the processing unit 3 in order to obtain a suitable quantity of light, scattered from the paper 6, in the light detector 12. The light scatters from the scanning surface arranged at the scanning hole 9 back to the light detector 12 through the optics part 11, and on the basis of the variations in the quantity of said scattered light at different points, i.e. scanning points, of the surface there are defined the variations in tonal density differences; a pixel map of dark and light scanning points is formed; the characters are outlined and the read graphic sign is then defined by means of a suitable OCR (Optical Character Recognition) program.

The lighting unit 13 includes reflector elements 16 arranged inside the case 7, advantageously on the inner surface of the point element 72 of the case 7, said elements 16 being for instance a light reflecting or scattering membrane 17 (such as a metal or plastic membrane), in order to focus the light to the scanning hole 9 and onto the scanning surface.

As an alternative for the reflector elements 16, such as the membrane 17, the lighting unit 13 includes a light conducting body 18, as is illustrated in the embodiment of figure 4, in order to direct the light of each light emitting diode 14 to the scanning hole 9 and onto the scanning surface to be lit.

The optics part 11 comprises an objective, such as a lens 19, and beam splitter 20, such as a beam splitter prism. In connection with the optics part 11, advantageously on the surface of the beam splitter 20, there is provided a filter 21 for essentially eliminating any illumination diffused from the environment from the light detector 12. The maximum penetration capacity of the filter 21 extends to the wavelength range of the radiation of the lighting unit 13.

The optics part 11 advantageously includes a deflector of the optical axis, such as a mirror 22. If the optical axis deflector is not used, the scanning hole 9 is arranged symmetrically and vertically with respect to the optical axis B - B. By means of the optical axis deflector, the scanning hole 9 can be arranged asymmetrically aside, off the optical axis B - B of the optics part 11, at a sharp angle with respect to the optical axis B - B (and also to the longitudinal axis A - A of the case 7 of the device). In this case the optical axis deflector, i.e. the mirror 22, is fitted in the vicinity of the scanning hole 9, on the inner surface of the element 71 of the case 7, so that the actual optical axis B - B falls thereon and is refracted aside at a slight angle, such as 15 - 30 degrees. The scanning hole 9 is arranged so that its transversal axis C - C (figure 5a) is perpendicular to the optical axis B - B that is deflected by the mirror 22 or the like. An advantage of the asymmetric arrangement of the scanning hole 9 is that during operation, the position of the device 1 is at an oblique angle β to the scanning surface, i.e. 90 degrees minus said refraction angle, 20 - 30 degrees, in other words β = 60 - 75 degrees, and thus the device fits naturally in the user's hand. When using the device 1, the scanning hole 9 and its surface are arranged to proceed essentially parallelly to the scanning surface, such as the paper 6.

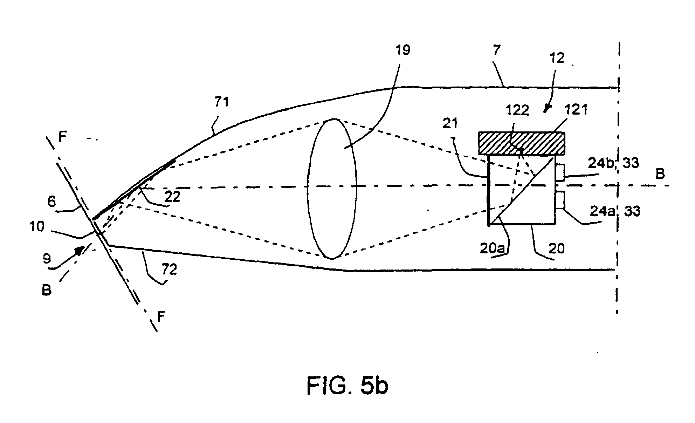

The light detector 12 comprises a beam splitter 20 and a line sensor 121, such as a CCD line sensor. The line sensor 121 includes a number of sensitive light sensor elements successively in a direct line 122 (cf. figures 5a and 5b), at a small distance from each other. Each light sensor element corresponds to one pixel to be read on the scanning surface. The employed line sensor 121 can be a prior art component that is in industrial production. The line sensor 121 includes for example a sensor part having a length of 128 light sensor elements, with a typical resolution of 12 pixels/mm imaged on paper, the width of the scanning surface (direction C - C) on paper being 10.7 mm. The width of the scanning hole 9 is proportional to the width of the scanning surface, and it can be adjusted, among others, through the optical features of the lens 19.

The line sensor 121 is positioned transversally, advantageously in perpendicular, to the longitudinal axis A - A of the case 7 of the device. This arrangement is illustrated, among others, in figures 5a and 5b. The light produced by the lighting unit 13, which light scatters from the scanning surface, such as paper 6, arranged at the scanning hole 9, is further directed, via the mirror 22 of the optics part 11 and further through the lens 19 to the beam splitter 20; from the beam splitter surface 20a thereof, the image of the scanning surface located on the level of the scanning hole 9 (as well as the direction of the produced light) is turned to a suitable angle, advantageously 90 degrees, off the optical main axis B - B, and focused towards the line sensor 121. Now the direction of the transversal axis C - C of the slot-like scanning hole 9, and the direction D - D of the indicator line 122 of the line sensor 121 are congruent, i.e. they are parallel. By matching the line sensor 121 and the beam splitter 20 together, the outer measures of the case 7, especially its diameter, are kept reasonable, and at the same time the whole structure can be made compact.

The processing unit 3 comprises a data processing unit 31 (cf. figure 1), such as a micro controller, provided with a suitable memory unit 32, a possible A/D converter and programs at least for the identification of the read characters in the data received from the optical input unit 2. The data processing unit 31 is realized for instance by the known CMOS technique, in which case the power consumption of the unit is low.

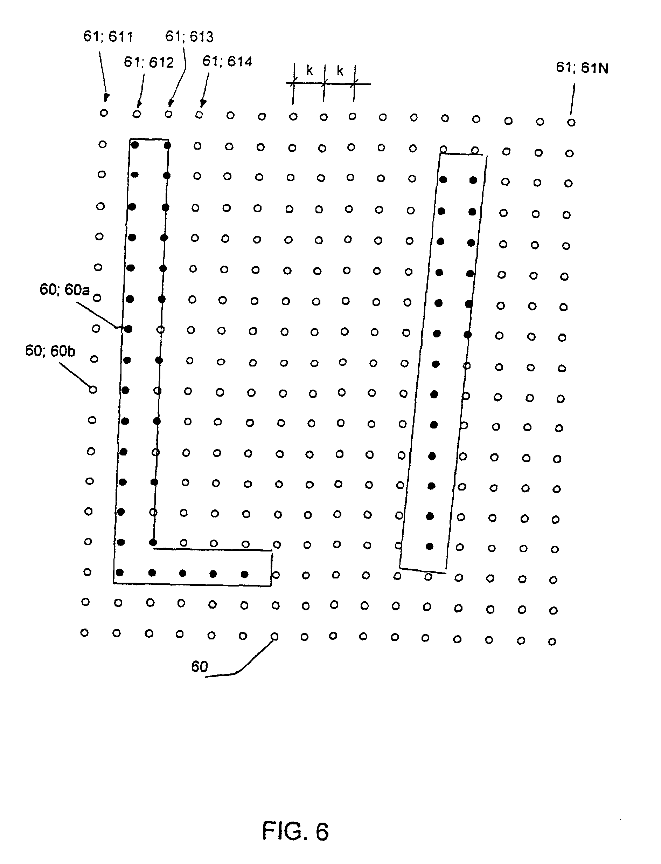

The operation of the optical input unit 2 and the processing unit 3 of the device 1 are illustrated in figure 6. We also refer to the figures 5a and 5b. The majority of the data received from the line sensor 12 of the optical input unit 2 does not as such contain information that is essential for the identification of graphic characters (for example the spaces between characters, such as letters, and the spaces between character groups, such as words). Thus the data received from the line sensor 121 must be compressed in the preprocessing. The scanning and interpretation device 1 is operated so that the scanning hole 9 of the device 1 is positioned, in the direction of its transversal axis C - C, essentially vertically to the direction of the character string, at a desired spot of the character string, such as the end of a word (or alternatively at the beginning), whereafter the scanning hole 9 is moved over the character string, essentially in the height direction F - F of the scanning hole 9, and in the direction of the character string, against the normal reading direction of the character string (or alternatively in the normal reading direction of the character string). Figure 6 illustrates a number of original pixel columns 61; 611, 612, 613,..., 61N, read with the line sensor 121. The line sensor 121 reads one pixel column 61 at a time in the direction of the transversal axis C - C of the scanning hole 9 and registers the tone values of the pixels 60 (dark/light). The number of the pixels 60 in one pixel column 61 depends on the number of the successive indicator elements in the line 122 of the line sensor. The aim is to maintain the mutual distances k of the pixel columns 61; 611, 612, 613,..., 61N constant during the scanning operation, for instance by measuring the scanning distance or scanning rate of the device during the operation by means of a suitable distance measuring system and by estimating the distance k. The pixels 60 are classified according to the quantity of light that has scattered from them by using a suitable threshold value, part as dark pixels 60a and part as light pixels 60b. From the point of view of the identification of a character, such as the letter L or I outlined in figure 6, the essential pixels are those that stand out from among the lot, in this case the dark pixels 60a; the light pixels 60b do not contain information about the character to be identified and can thus be ignored in this respect. By means of the program installed in the processing unit 3, the information connected to the pixels 60 is compressed by only paying attention to the relevant pixels related to the characters, in this case to the dark pixels 60a, and by outlining the form of the characters on the basis of these. With a suitable identification program, the outlined characters are compared with known characters recorded in the memory, and when a corresponding character is found, it is given a predetermined binary code. This code is used when further processing the character strings. The beginning and end of the character string are determined by a suitable code. It is pointed out that interpretation programs for optical characters, i.e. OCR interpretation programs (Optical Character Recognition) are commercially available, and such a program can be recorded in the memory unit 32 of the processing unit 3.

In order to reliably observe graphic characters, it is advantageous to know the scanning distance or rate of the scanning and interpretation device 1, as was already maintained above. In that case the scanning and interpretation device I includes a distance measuring unit 23 for measuring the scanning distance over the character base 6 and at the same time over the characters 6a. In the scanning operation, the scanning and interpretation device 1 is moved over the characters, in the direction of the character string, by scanning with the scanning hole 9. Now the line sensor 121 of the input unit 2 perceives, in successive order and in a linear fashion, a number of adjacent pixels describing the variation of dark and light sections between the characters and their background, as was explained in connection with figure 6. For a reliable observation of the successive, linear pixel columns 61, there is required information as for the scanning distance and/or rate.

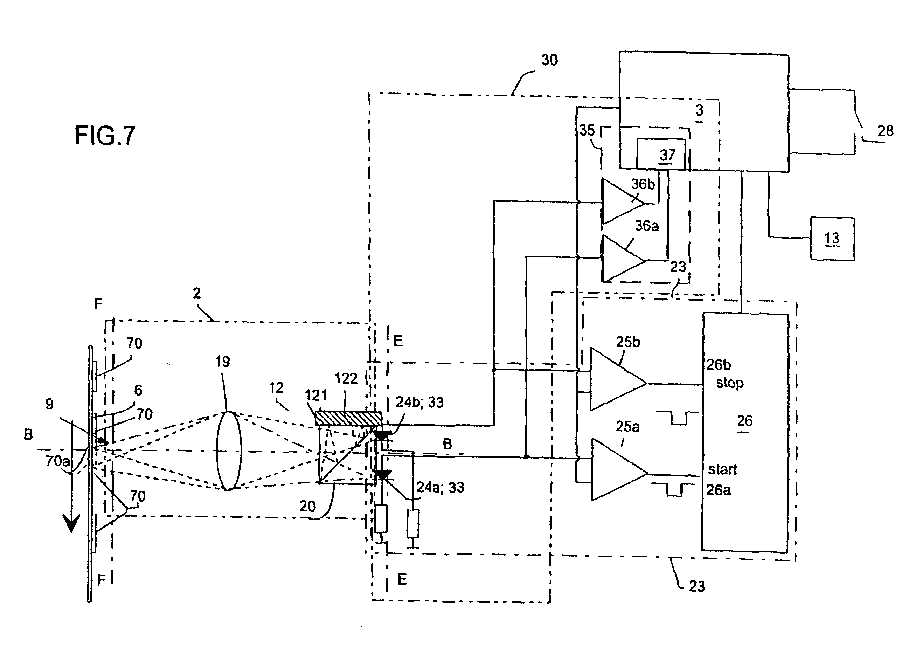

The distance measuring unit 23 is advantageously realized optoelectronically, without mechanically moving parts. In that case the distance measuring unit 23 is advantageously part of the optical input unit 2, and preferably part of the light detector 12, too. The distance measuring unit 23 comprises two light detectors 24; 24a, 24b, two comparators 25; 25a, 25b and a calculation unit 26. The light detectors 24; 24a, 24b are arranged in connection with the beam splitter 20, on the other side of the beam splitter surface 20a thereof, transversally to the line sensor 121. Furthermore, the light detectors 24; 24a, 24b are spaced apart on an imaginary straight line E - E which runs in perpendicular to the direction D - D of the indicator line 122 of the line sensor 121, as is schematically illustrated in figure 7 (cf. also figures 5a and 5b). The incoming light which has scattered from the scanning surface is divided in the beam splitter 20 into two directions, one to the line sensor 121 and the other to the pair of light detectors 24; 24a, 24b. The line sensor 121 reads pixels 60 (cf. figure 6) on the scanning surface, said pixels being, in the transversal direction C - C of the scanning hole 9, in a suitable position with respect to the indicator line 122. The light detector couple 24; 24a, 24b reads light scattered from such areas of the scanning surface that are in the height direction of F - F of the scanning hole 9 located at a distance from each other, advantageously near the edges of the scanning hole 9. The height of the scanning hole 9 in the direction F - F is for example 1 mm, in which case the areas that are read with the light emitting diodes 24; 24a, 24b are on the paper (i.e. on the scanning surface) located for instance at 0,5 mm intervals from each other. Both light detectors 24; 24a, 24b are connected to a comparator 25; 25a, 25b in order to compare the detected light quantity with the determined threshold value. The comparators 25; 25A, 25b are further connected to a calculation unit 26, to the first or starting input 26a thereof, and respectively to the second 26b or stopping input 26b. By means of the calculation unit 26, there is counted for example the number of the clock pulses in the system clock of the processing unit 3.

In principle the distance measuring unit 23 operates as follows. When the front edge 70a of a character 70, visible as dark (or alternatively light) on the scanning surface, enters the area observed by the first light emitting diode 24a in the scanning hole 9, it reduces (increases) the light quantity detected by the first light emitting diode 24a, until it falls below (rises above) the predetermined threshold value, and this is detected in the first comparator 25a, from which the data is further fed to the first input 26a of the calculation unit 26, and the pulse counter of the calculation unit 26 is started. When the front edge 70a of the respective character 70, visible as dark (or alternatively light) on the scanning surface, enters the area observed by the second light emitting diode 24b in the scanning hole 9 (illustrated by dotted lines in figure 7), i.e. the other side of the scanning hole 9, it reduces (increases) the light quantity detected by the second light emitting diode 24b, until it falls below (rises above) the predetermined threshold value, and this is detected in the second comparator 25b, from which the data is further fed to the second input 26b of the calculation unit 26, and the calculation unit 26 is stopped. When the distance of the points of observation of the light detectors 24; 24a, 24b in the scanning hole 9 and particularly in its transversal direction E - E is known, and said distance that is covered per unit of time is measured as a clock pulse reading between the starting and stopping of the calculation unit 26, the scanning rate of the scanning and interpretation device 1 can be calculated. The clock pulse reading of the calculation unit 26 is inversely proportional to the scanning rate of the scanning and interpretation device 1, and this reading is fed to the processing unit 3. The sampling interval of the line sensor 121 (distance k between pixel columns 61 in figure 6) is synchronized, on the basis of the clock pulse reading, with the distance covered in the scanning process. Thus the sampling interval in relation to the character base, such as paper, can be standardized and made independent of the scanning rate when outlining and identifying graphic characters.

Advantageously the scanning and interpretation device 1 also includes an optical identifier 30 of the character base, such as paper. The occurrence of paper 6 or some corresponding character base in front of the scanning hole 9 of the device 1 can be perceived with the optical identifier 30, and in that case the device 1 is activated to operating mode. An application of the identifier 30 is schematically illustrated in figure 7. The identifier 30 is part of the optical input unit 2, and advantageously part of the light detector 12. The identifier 30 comprises a light detector 33 and a recording unit 35. The light detector 33 is advantageously the pair of light detectors 24; 24a, 24b of the distance measuring unit 23, or only one of its light detectors, 24a, 24b. The recording unit 35 comprises at least one amplifier 36; 36a, 36b and an AID converter 37 which is advantageously part of the processing unit 3. The input of the light detector 33; 24a, 24b is connected, through the amplifier 36; 36a, 36b to the AID converter 37 and further to the processing unit 3.

The identifier 30 operates as follows. Let us assume that the device 1 is idle, i.e. a minimum standby current is supplied to its electric parts. In idle mode, control pulses are fed at a low repetition frequency to the lighting unit 13, as controlled by the processing unit 3. The light detector 33; 24a, 24b measures continuously the intensity of the light that has scattered from a surface possibly located in the vicinity of the scanning hole 9. The measurement data is fed, via the amplifier 36 and the A/D converter 37, to the processing unit 3 which is arranged to monitor the starting signal of the light detector 33; 24a, 24b. When a paper 6 or a corresponding base and the device, especially the scanning hole 9 of the device, approach each other, the light produced by the lighting unit 13 will begin to scatter from the paper back to the device. This backscattering light is perceived by the processing unit 3 as an increased measurement reading of the light detector 33; 24a, 24b as for the light quantity. When the intensity of the backscattered light and the starting signal of the light detector 33 exceed the predetermined threshold value, this is interpreted as an identification of paper 6 or the like in front of the scanning hole 9. The device 1 is switched to active mode, i.e. a full operating current is fed to its electric parts instead of the standby current of the idle mode. Now the device 1 is in operating order, and the optical scanning of characters can begin. Respectively, the identifier 30 perceives the absence of paper 6 in front of the scanning hole 9; in that case the device 1, after a suitable delay time such as 10 s, is again switched to idle mode. The described switching between the idle mode and the operative mode is important as regards the power consumption and the operation time of the device 1. It saves the battery 51 of the current unit 5, and the battery serves longer with one charging.

Advantageously the scanning and interpretation device 1 also includes a power switch 28 (figure 7) for starting the operation of the device. The power switch 28 is preferably connected to the processing unit 3. The power switch 28 is realized for example as a mechanical switch which is advantageously arranged in the vicinity of the scanning hole 9, at the end 72 of the point element of the case 7. The switch 28 is turned by pressing the end 72 of the point element against paper or the like, thus giving a signal to the processing unit 3, which in turn will start and activate the functions of device 1.

As an alternative, the power switch 28 can be arranged as a push button in the case 7, in the vicinity of the grip part 8 so that it will be near the user's forefinger and this easily available.

It is pointed out that the optical identifier 30 can also be arranged to function as the power switch 28, similar to the one described above.

The display unit 4 includes an elongated liquid crystal display screen 41 or the like, which is arranged in connection with the case 7, advantageously at the opposite end of the case 7 with respect to the point element 71 of the case and to the optical input unit 2, as is illustrated for instance in figure 2a. The display unit 4 also includes a suitable display controller in order to control its operation. Advantageously the display screen 41 includes for example an alphanumeric display screen of two character lines, the length of said lines being for instance 20 - 40 characters. In the processing unit 3 and in the other units possibly connected thereto, the identified and interpreted characters are fed into the display unit 4 and presented on the display screen 41 of the device.

The scanning and interpretation device 1 is provided with an interface unit 27a in order to connect the device to an external device, such as an external data processing device, for example to a personal computer, such as a hand-held computer, or to a mobile station, such as a GSM telephone, and therethrough further to a second external device. Advantageously the interface unit 27a includes a radio connection, i. e. a radio transceiver, or an infrared connection, i.e. an infrared transceiver, through which for example the device 1 can be connected, for instance via a two-way communication channel, wirelessly to an external intelligent device. In that case part of the identification and/or interpretation programs of optically read characters can be installed in an external device.

Advantageously the scanning and interpretation device 1 further includes a card interface unit 27b in order to connect a smart card, a memory unit, a separate communication unit or a corresponding card 271 to the device. Thus the data processing capacity of the device 1 can be increased and the forms of operation diversified by increasing the performance of its commands, by extending its memory capacity or by realizing a two-way communication with an external intelligent device. Some of the identification and/or interpretation programs of optically read characters can also be installed on a replaceable card 271.

The light detector 12, such as the line sensor 121 provided therein, the processing unit 3, the display unit 4 and at least part of the optical input unit 2 possibly provided with the calculation unit 25, the interface unit 27a, and the card interface unit 27b of the scanning and interpretation device 1 are all advantageously arranged on a circuit board 29, as is illustrated in figure 3. The circuit board 28 is installed in the case 7.

The optical input unit 2 advantageously includes an auxiliary frame 15, where at least the optics part 11 and the lighting unit 13 are installed (cf. figure 3). Thus the critical components, as for their dimensions and installation, are accurately matched on one and the same installation base.

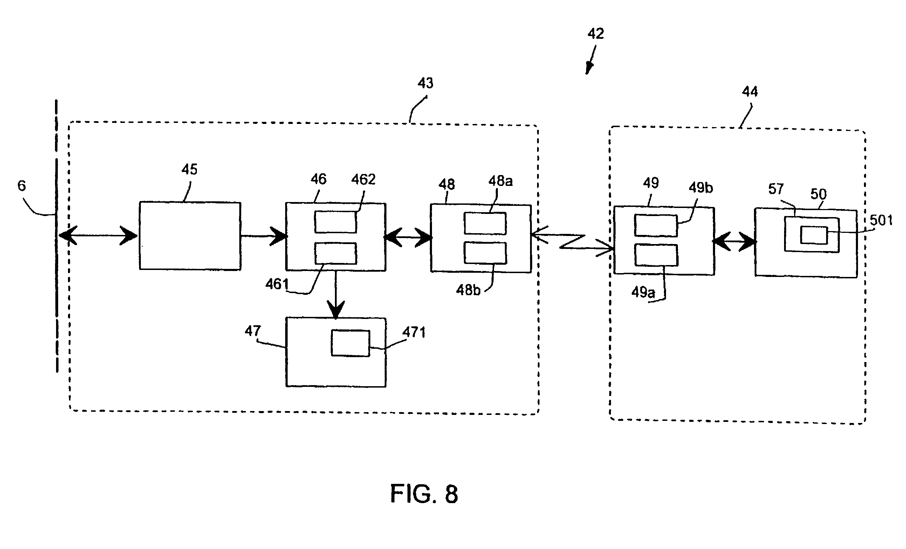

According to the block diagram of figure 8, the second scanning and interpretation device 42 according to the invention comprises a separate input and display unit 43 and an interpretation unit 44 The input and display unit 43 is a small, hand-held part of the device. The interpretation unit 44 forms a part of the device that is kept on the table or even in the pocket. It can also be part of a personal computer or a mobile phone, for example.

The input unit and display unit 43 comprises an optical input unit 45, a processing unit 46, a display unit 47 and a first data transfer unit 48. The optical input unit 45 is used for optically reading for example graphic characters that are written on paper. The processing unit 46 is connected to the optical input unit 45. In the processing unit 46, the optically read data is preprocessed at least by means of a suitable program for packing the data contained in the pixels, as was explained above, for example in connection with figure 6. The first data transfer unit 48 includes a transmission unit 48a which is been connected to the processing unit 46 in order to transfer the preprocessed data to the interpretation unit 44. The first data transfer unit 48 also includes a receiver unit 48b for receiving the translation transmitted from the interpretation unit 44. The receiver unit 48b is further connected to the display unit 47 in order display the translation.

The interpretation unit 44 includes a second data transfer unit 49. It is provided with a receiver unit 49b in order to receive the preprocessed data transmitted from the scanning and display unit 43. The interpretation unit 44 further includes a data processing unit 50 to which the receiver unit 49b is been connected, for interpreting the preprocessed character data by means of a program installed therein. Here the term 'interpretation' refers to at least the identification of the read characters and/or character groups in the preprocessed character data, possibly to the checking of the characters, and to the searching and possible finding of equivalents and interpretation data for the respective characters and/or character strings in the translation file. The data transfer unit 49 also includes a transmission unit 49a in order to transfer the translation obtained in the data processing unit 50 to a scanning and display unit 42.

The scanning and display unit 43 and the interpretation unit 44 of the scanning and interpretation device are arranged to communicate between themselves, advantageously wirelessly, through the data transfer units 48, 49, either at radio frequency (frequency for example 1.2 GHz) or at the wavelength range of infrared light (for example within the range of 0,7 - 1,3 µm). Thus the data transfer units 48, 49 are carried out either by means of a radio transceiver unit or an infrared transceiver unit.

The units belonging to the input and display unit 43, that is the optical input unit 45, the processing unit 46, the display unit 47 and the first data transfer unit 48, are arranged in an oblong case 51. Said case 51 is provided with a suitable grip surface 52, at which it is advantageously held by the fingers and supported during use.

Advantageously the case 51 is pen-shaped, such as a lengthy cylinder or prism, like the case 7 of the scanning and interpretation device 1 illustrated in figures 2a, 2b and 2c. The outer surface of the case 51 is at least partly formed as a grip surface 52, in other words such a slender part of the case which is easy to hold in the fingers and get a firm grip of while using the device.

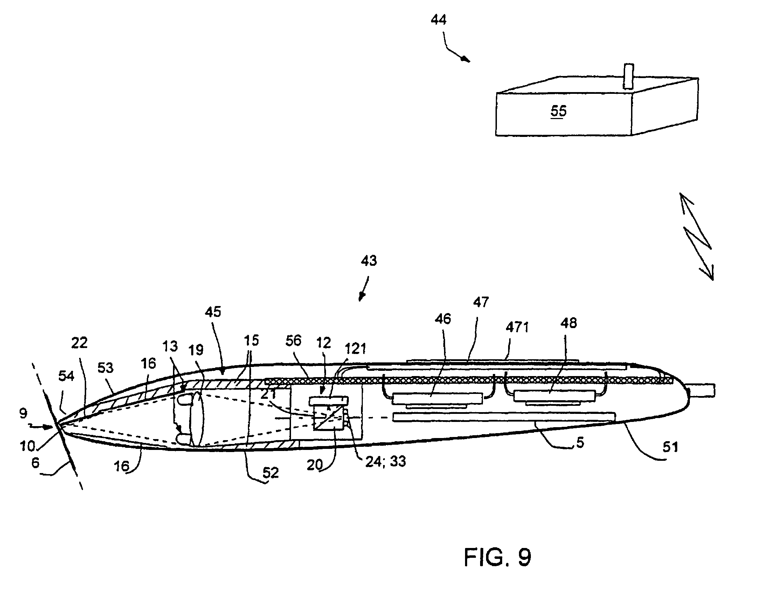

The case 51 is provided with an advantageously conical element 53 which narrows in at least one level of the longitudinal axis of the case 51, in connection of which element 53 there is arranged the optical input unit 45. In connection with the pen-shaped case 51 (figure 9) described above, the conical case element 53 is a natural structural solution for the installation of the optical input unit 45, but said element part 53 can also be adapted in connection with cases with a different form. In this embodiment, the case 51 and its conical element 53 correspond for instance to the case 7 and the point element 71 of the scanning and interpretation device 1 according to figures 2a, 2b and 2c.

The optical input unit 45 is advantageously carried out in the same way as the optical input unit 2 of the scanning and interpretation device 1 that was described above, in connection with figures 1 - 7. Like reference numbers are used for like parts of the optical input unit 45. The optical input unit 45 comprises a scanning hole 9, through which character data is read to into the scanning and display unit 43, an optics part 11, a light detector 12 and lighting unit 13 in order to illuminate the characters to be read, as is illustrated in figure 9. The scanning hole 9 is fitted at the end 54 of the conical element 53 of the case 51, in similar fashion as at the end 72 (cf. figure 3) of the conical element 71 of the scanning and interpretation device 1.

The processing unit 46 comprises a data processing unit 461, such as micro controller, with a suitable memory unit 462, possibly and A/D converter as well as files and programs for the identification of the read character data from the data received from the optical input unit 3. The data processing unit 46 is realized for example by utilizing the known CMOS technique, in which case the power consumption of the unit is low.

The display unit 47 comprises an oblong liquid crystal display 471 or the like, which is arranged in connection with the case 51, advantageously at the opposite end of the case 51 with respect to the point element 52 and the optical input unit 45. The display unit 47 also includes a suitable display controller in order to control the operation of the display screen 471. The display screen 471 is been carried out for example as a two-row alphanumeric display screen having a length of the order of 20- 40 characters.

In connection with the of data processing unit 50 of the interpretation unit 44, there are provided one or more program units for identifying the characters and for interpreting the consecutive character strings in a predetermined manner in order to obtain a translation. In its simplest form, the translation is itself a character and/or character string that is read with the optical input unit 45. It is transmitted, through the data transfer units 48, 49 to the scanning and display unit 43, in order to be displayed on the display screen 471 thereof.

The interpretation unit 44 is advantageously arranged in a small case 55 that can be fitted in the user's pocket or bag, in the vicinity of the site of usage of the input and display unit 43.

The interpretation unit 44 can be realized in many different ways. It can be a part of a personal computer, such as a portable computer or a normal desktop computer or mobile phone. The data transfer unit 49 of the interpretation unit 44 can be installed in the interface card of a personal computer, such as a PC card (PCMCIA card). In that case the employed data processing unit 50 in turn is a personal computer equipped with suitable programs.

The data transfer unit 48 of the input and display unit 43 is advantageously carried out by means of a radio module containing both the transmission unit 48a and the receiver unit 48b. Consequently, the data transfer is realized by means of a radio frequency carrier wave. The data transfer unit 49 of the interpretation unit 44 can also be carried out in a corresponding manner..

The light detector 12, the processing unit 46 and the calculation unit 27 possibly connected thereto, the first data transfer unit 48 and the display unit 47 as well as at least part of the optical input unit 45 provided in the input and display unit 43 are all advantageously installed on a circuit board 56 as is illustrated in figure 9. The circuit board 56 is fitted in the case 51.

An advantageous application of the scanning and interpretation device 42 according to the invention is an electronic translator. Accordingly, the device is arranged to translate a set of characters from a source language into a target language, the translation being displayed on the screen, in which case the translation software unit is installed in the memory 57 of the data processing unit 50 of the interpretation unit 44. The scanning and interpretation device 42 can contain several language translation software units in different languages, so that for example the source and target languages can be selected.

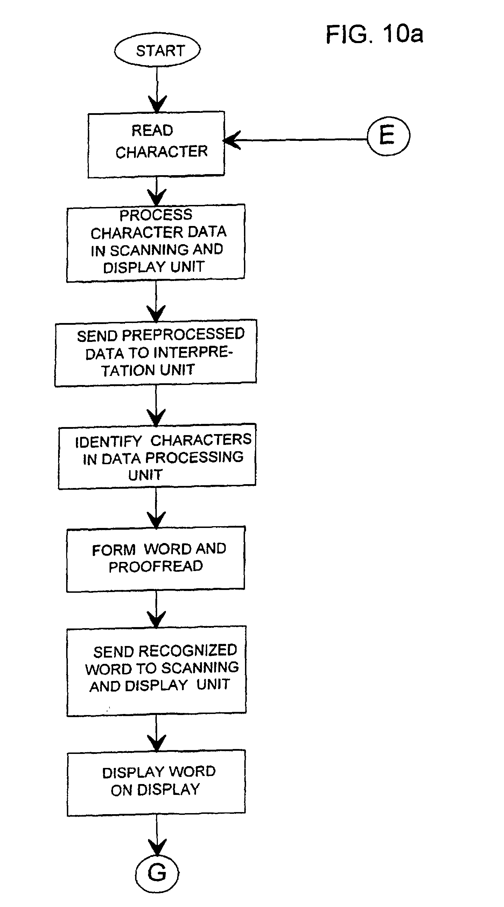

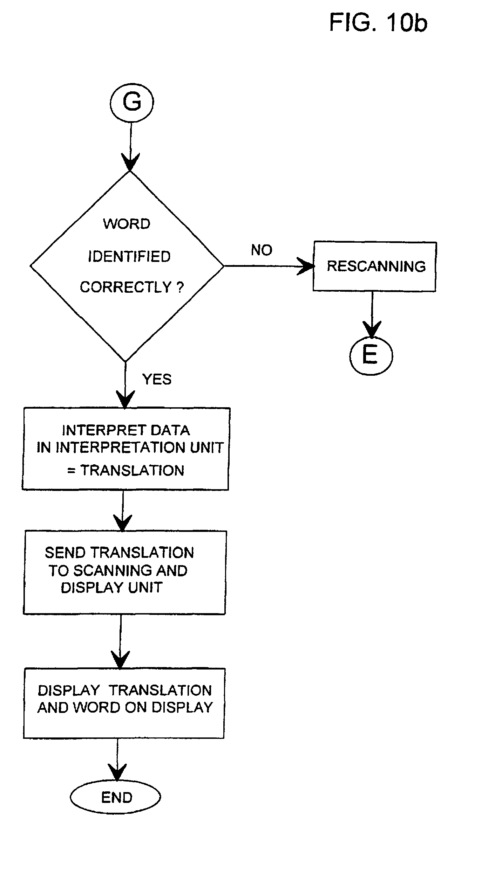

The scanning and interpretation device 42 according to the invention, realized as an electronic translator, is in principle operated as follows. We refer to the flowchart of figures 10a and 10b. First the source and target languages are selected, for instance by specifying the languages and by placing a suitable language translation software unit into the interpretation unit 44. Then the case 51 of the scanning and display unit 43, is taken in a firm grip with the thumb and the forefinger of the hand, particularly at the suitable grip surface 52. The scanning and display unit 43 and particularly the narrow scanning hole 9 of its optical input unit 2 are placed, in the transversal direction C - C, at the vertical direction of the letters of the source language and is moved over the text along the text line. The processing unit 46 processes the character data obtained from the optical input unit 45, for example in the same fashion as was explained above, in connection to figure 6, and the character data is compressed at least into letter figure data, i.e. data that only contains information essential for the identification of the characters; this data is transmitted further, by means of the transmission unit 48a of the first data transfer unit 48, to the receiver unit 49b of the second data transfer unit 49 of the interpretation unit 44. From here, the preprocessed character data is transmitted to the data processing unit 50, where the characters of the source language are identified by means of the OCR interpretation program. The identified characters of the source language are transformed into a word or words of the source language, the word or words are proofread and it/they are transmitted back to the scanning and display unit 43 through the transmission unit 49a of the second data transfer unit 49 of the interpretation unit 44. The word or words of the source language are received by means of the receiver unit 49b of the first data transfer unit 48 and transferred via the processing unit 46 to the display unit 47 and then displayed on the display screen 471 thereof. Now the word/words of the source language can be checked; if a mistake is detected, the scanning of the letters of the character string, i.e. the word, can be repeated.

When the word/words of the source language are correctly read into the interpretation unit 44, it/they are fed into the translation program, whereafter the program searches from the translation file a translation in the target language for the source language word/words. The obtained result can be more than one word. The obtained, interpreted word/words in the target language are sent from the interpretation unit 44 to the scanning and display unit 43, to be displayed on the display screen 471 thereof. Advantageously both the source language and target language words are presented on their own lines on the display screen 471. When necessary, the use can also ask the interpretation unit 44 for other interpretation alternatives, such as synonyms etc.

The data processing unit 50 of the electronic interpreter's interpretation unit 44 includes a memory unit 57 for the language translation software, which memory unit advantageously is a memory module that can be changed.

The data processing unit 46 of the scanning and display unit 43 is a programmable unit arranged to be programmed by means of the programming tools connected to interpretation unit 44. Thus realized, the scanning and interpretation device 42 is a multipurpose device that can be modified to perform a versatile range of tasks according to the specific needs in question. Among these tasks, let us point out for instance the scanning of a spare parts list and a quick checking up of a spare parts inventory; a quick checking of passports and similar registered official documents as well as the scanning of the price information of products directly from plain number sequences.

Correspondingly, the processing unit 3 of the first scanning and interpretation device I can also be a programmable device, which can be modified according to specific needs by means of the programming tools connected thereto.

It is pointed out that the above described first scanning and interpretation device 1 (for instance figure 1) is preferably an independent device, to which there can as a whole be integrated the same units and functions as to the second scanning and interpretation device 42 (for instance figure 8) provided with the separate input and display unit 43 and the interpretation unit 44. The data processing capacity in the second scanning and interpretation device 42 is in principle unlimited: it depends on the interpretation unit 44, which can be a mainframe computer or a group of network connected computers. The physical size of the first scanning and interpretation device 1, in other words its case, its consumption of electricity and its degree of integration set the limits to its data processing capacity as an independent device. However, the first scanning and interpretation device 1 can be connected to an external device through the interface unit 27a or the card interface unit 27b.

The first scanning and interpretation device 1 can be carried out as an electronic translator, as was described above, as a modification of the second scanning and interpretation device 42. In that case all functions are advantageously carried out in one and the same device. The shifting from one language to another is carried out by means of separate language modules realized by means of cards 271. The language module includes for example a program unit in order to identify the characters and/or character groups of the source language, and in order to interpret them into the target language.

The invention and some of its embodiments are described briefly in the above specification. It is, however, obvious that the invention can be modified in many ways within the extent of protection provided by the appended patent claims.

## Claims

1. A scanning and interpretation device (42) for reading and interpreting signs and characters, where the signs and characters are read optically, the read character data is preprocessed, the characters and/or character groups such as words are identified, the characters and/or character groups are interpreted and displayed on a suitable display unit (47), **characterized in that** the scanning and interpretation device (42) comprises two separate units, which are an input and display unit (43) and an interpretation unit (44) as an external device, which input and display unit (43) is a handheld unit by means of which the scanning of the characters and the preprocessing of the read character data is carried out and which input and display unit (43) comprises a data transfer unit (48) having a wireless transceiver by means of which the preprocessed character data is transferred wirelessly to the interpretation unit (44), where characters and/or character groups, such as words, are identified and interpreted, and the identified characters and/or character groups, such as words, and the translation are transmitted wirelessly to the input and display unit (43) to be displayed on the display unit (47) thereof.

2. A scanning and interpretation device (42) according to claim 1 comprising
- an optical input unit (45) for optically reading graphic signs and characters;
- first and second processing units (44, 46) which are connected to the optical input unit (45) and where the read character data is preprocessed and interpreted; and
- a display unit (47) for displaying the data received from the processing units (44, 46); **characterized in that** the scanning and interpretation device (42) comprises two separate units, which are an input and display unit (43) and the first processing unit i. e. an interpretation unit (44), where
- said input and display unit (43) comprises said optical input unit (45), the second processing unit (46), display unit (47) and in addition a first data transfer unit (48) including a transmission unit (48a), which is connected to the second processing unit (46) in order to transfer preprocessed character data to the interpretation unit (44), as well as a receiver unit (48b) for receiving the data transmitted from the interpretation unit (44), said receiver unit (48b) being further connected to the display unit (47) in order to display the translation, said units (45, 46, 47, 48) of the input and display unit (43) being fitted in a case (51) provided with a suitable grip surface (52), at which it is advantageously held by hand and supported during use; and
- said interpretation unit (44) further comprising a second data transfer unit (49) including a receiver unit (49b) for receiving the preprocessed character data transmitted from the input and display unit (43), and a transmission unit (49a) for transmitting the translation received from the interpretation unit (44) to the input and display unit (43).

3. A device according to claim 1 or 2, **characterized in that** the data transfer unit (48, 49) is a unit operating at radio frequency or at the wavelength range of infrared light, by means of which the input and display unit (43) and the interpretation unit (44) are arranged to communicate wirelessly between each other.

4. A device according to claim 1, 2 or 3, **characterized in that** the second processing unit (46) comprises a data processing unit (461), such as a micro controller, with a suitable memory unit (462) and a program for preprocessing the read character data from the data received from the optical input unit (45).

5. A device according to claim 4, **characterized in that** in the data processing unit (50) of the interpretation unit (44), there is installed one or more program units (501) for identifying the characters and interpreting the consecutive character strings in order to obtain a translation, which then is transferred through the data transfer units (48, 49) to the input and display unit (43), to be displayed on the display unit (47) thereof.

6. A device according to claim 5, **characterized in that** the scanning and interpretation device (42) is arranged to translate a first character set of the first source language, read by the optical input unit (43), into the second target language, in which case the language translation software unit is installed in the memory unit (57) of the data processing unit (50) in the interpretation unit (44), and that at least the target language translation can be displayed in a display unit (47).

7. A device according to any of the preceding claims 2 - 6, **characterized in that** the second processing unit (46) is a programmable data processing unit, such as a micro controller that is arranged to be programmed by means of programming tools connected to the interpretation unit (44).

8. A device according to any of the preceding claims 2 - 7, **characterized in that** the interpretation unit (44) is arranged in a small case (55) which can be fitted in a pocket or bag, in the vicinity of the input and display unit (43).

9. A device according to any of the preceding claims 2 - 8, **characterized in that** the case (51) is a pen-shaped capsule having, for instance, the form of an elongated cylinder or a prism.

10. A device according to claim 9, **characterized in that** the case (51) comprises an advantageously conical element (53) narrowing in at least one direction, in connection of which the optical input unit (45) is arranged, and at the end (54) of which there is provided an advantageously oblong scanning hole (9), through which graphic characters are read into the device.

11. A device according to any of the preceding claims, **characterized in that** the optical input unit (2; 45) comprises:
- an optics part (11) including a lens (19) and advantageously a filter (21);
- a light detector (2) including a line sensor (121), such as a CCD line sensor, for detecting the character data to be read; and
- a lighting unit (13) for lighting the scanning surface.

12. A device according to claim 11, **characterized in that** the lighting unit (13) comprises reflector elements (16) arranged inside the case (7; 51), advantageously on the inner surface of the point element (71; 53) of the case (7; 51), in order to direct the light to the scanning hole (9).

13. A device according to claim 11 or 12, **characterized in that** the light detector (12) comprises a beam splitter (20) for turning the scanning surface arranged in the scanning hole (9), with the images of the graphic characters contained therein, towards the line sensor (121) positioned at an angle with respect to the scanning hole (9).

14. A device according to any of the preceding claims 11- 13, **characterized in that** the scanning hole (9) is arranged asymmetrically aside of the optical axis (B - B) of the optics part (11), and at a sharp angle with respect to the optical axis (B - B), in which case the optics part (11) comprises a deflector of the optical axis, such as a mirror (22), fitted in the vicinity of the scanning hole (9).

15. A device according to any of the preceding claims 11 - 14, **characterized in that** the optical input unit (2; 45) comprises an auxiliary frame (15), where at least the optics part (11) and the lighting unit (13) are installed.

16. A device according to any of the preceding claims 11 - 15, **characterized in that** the device (1; 42) includes an optical distance measuring unit (23) for measuring the scanning distance covered over the characters.

17. A device according to any of the preceding claims 11 - 16, **characterized in that** the device (1; 42) comprises an optical identification device (30) or the like, for identifying the base or the starting point from which graphic characters are read and the functions of the device (1; 42) are activated.

18. A device according to any of the preceding claims 11 - 17, **characterized in that** the display unit (47) comprises an oblong liquid crystal display screen (471) or the like which is arranged in connection with the case (51).

19. A method for reading and interpreting signs and characters, wherein the signs and characters are read optically, the read character data is preprocessed, the characters and/or character groups such as words are identified, the characters and/or character groups are interpreted and displayed on a suitable display unit, **characterized in that** the scanning of the characters and the preprocessing of the read character data is carried out in a first unit (43), which is held by hand, whereafter the preprocessed character data is transferred wirelessly to a second unit (44), where characters and/or character groups, such as words, are identified and interpreted, and the identified characters and/or character groups, such as words, and the translation are transmitted wirelessly to the first unit (43), where they are displayed.

## Patentansprüche

1. Abtast- und Interpretier-Gerät (42) zum Lesen und Interpretieren von Zeichen und Schriftzeichen, wobei die Zeichen und Schriftzeichen optisch gelesen werden, die gelesenen Schrifizeichendaten vorverarbeitet, die Schriftzeichen und/oder Schriftzeichengruppen, wie z. B. Wörter, identifiziert werden, die Schriftzeichen und/oder Schriftzeichengruppen interpretiert und auf einer geeigneten Wiedergabeeinheit (47) angezeigt werden,
**dadurch gekennzeichnet, dass** das Abtast- und Interpretier-Gerät (42) zwei separate Einheiten umfasst, welche eine Eingabe- und Wiedergabeeinheit (43) und eine Interpretationseinheit (44) als ein externes Gerät sind, welche Eingabe- und Wiedergabeeinheit (43) eine tragbare Einheit ist, mittels der das Abtasten der Schriftzeichen und die Vorverarbeitung der gelesenen Schriftzeichendaten ausgeführt wird und welche Eingabe- und Wiedergabeeinheit (43) eine Datenübertragungseinheit (48) mit drahtlosem Transceiver umfasst, mittels welchem die vorverarbeiteten Schriftzeichendaten drahtlos zu der Interpretationseinheit (44) übertragen werden, wo Schriftzeichen und/oder Schriftzeichengruppen, wie z. B. Wörter, identifiziert und interpretiert werden und die identifizierten Schriftzeichen und/oder Schriftzeichengruppen, wie z. B. Wörter, und die Übersetzung drahtlos zu der Eingabe- und Wiedergabeeinheit (43) übertragen werden, um auf der Wiedergabeeinheit (47) derselben angezeigt zu werden.

2. Abtast- und Interpretier-Gerät (42) gemäß Anspruch 1, umfassend
- eine optische Eingabeeinheit (45) zum optischen Lesen von graphischen Zeichen und Schriftzeichen;
- erste und zweite Verarbeitungseinheiten (44, 46), welche an die optische Eingabeeinheit (45) angeschlossen sind und mit denen die gelesenen Schriftzeichendaten vorverarbeitet und interpretiert werden; und
- eine Wiedergabeeinheit (47), um die von den Verarbeitungseinheiten (44, 46) erhaltenen Daten wiederzugeben;
**dadurch gekennzeichnet, dass** das Abtast- und Interpretier-Gerät (42) zwei separate Einheiten umfasst, welche eine Eingabe- und Wiedergabeeinheit (43) und die erste Verarbeitungseinheit, d.h. eine Interpretationseinheit (44) sind. wobei
- die Eingabe- und Wiedergabeeinheit (43) die optische Eingabeeinheit (45), die zweite Verarbeitungseinheit (46), die Wiedergabeeinheit (47) und zusätzlich eine erste Datenübertragungseinheit (48) mit einer Übertragungseinheit (48a) umfasst, welche an die zweite Verarbeitungseinheit (46) angeschlossen ist, um vorverarbeitete Schriftzeichendaten zu der Interpretationseinheit (44) zu transportieren, als auch eine Empfangseinheit (48 b) zum Empfang der von der Interpretationseinheit (44) übertragenen Daten, welche Empfangseinheit (48 b) weiter mit der Wiedergabeeinheit (47) verbunden ist, um die Übersetzung anzuzeigen, welche Einheiten (45, 46, 47, 48) der Eingabe- und Wiedergabeeinheit (43) in einem Gehäuse (51) mit einer geeigneten Griffoberfläche (52) vorgesehen sind, an welcher er vorteilhaft in der Hand gehalten und während der Anwendung getragen wird; und
- die Interpretationseinheit (44) weiter eine zweite Datenübertragungseinheit (49) mit einer Empfangseinheit (49 b) zum Empfang der von der Eingabe- und Wiedergabeeinheit (43) übermittelten, vorverarbeiteten Schriftzeichendaten und eine Übertragungseinheit (49 a) zum Übertragen der von der Interpretationseinheit (44) empfangenen Übersetzung an die Eingabeund Wiedergabeeinheit (43) umfasst.

3. Gerät gemäß Anspruch 1 oder 2,
**dadurch gekennzeichnet, dass** die Datenübertragungseinheit (48, 49) eine auf Radiofrequenz oder auf dem Wellenlängenbereich von infrarotem Licht arbeitende Einheit ist, mittels der die Eingabe- und Wiedergabeeinheit (43) und die Interpretationseinheit (44) zur drahtlosen Kommunikation miteinander eingerichtet sind.

4. Gerät gemäß Anspruch 1, 2 oder 3,
**dadurch gekennzeichnet, dass** die zweite Verarbeitungseinheit (46) eine Datenverarbeitungseinheit (461), wie z. B. eine Mikrosteuerung, mit einer geeigneten Speichereinheit (462) und ein Programm zur Vorverarbeitung der gelesenen Schriftzeichendaten aus den von der optischen Eingabeeinheit (45) empfangenen Daten umfasst.

5. Gerät nach Anspruch 4,
**dadurch gekennzeichnet, dass** in der Datenverarbeitungseinheit (50) der Interpretationseinheit (44) eine oder mehrere Programmeinheiten (501) zur Schriftzeichenidentifizierung und Interpretierung der aufeinanderfolgenden Schriftzeichenreihen installiert sind, um eine Übersetzung zu erhalten, welche dann mittels der Datenübertragungseinheiten (48, 49) zu der Eingabe- und Wiedergabeeinheit (43) gesendet wird, um auf deren Wiedergabeeinheit (47) wiedergegeben zu werden.

6. Gerät nach Anspruch 5,
**dadurch gekennzeichnet, dass** das Abtast- und Interpretier-Gerät (42) eingerichtet ist, um eine von der optischen Eingabeeinheit (43) gelesene, erste Schriftzeichenfolge der ersten Quellsprache in die zweite Zielsprache zu übersetzen, in welchem Fall die Sprachübersetzungs-Software-Einheit in der Speichereinheit (57) der Datenverarbeitungseinheit (50) in der Interpretationseinheit (44) installiert ist, und dass wenigstens die Zielsprachenübersetzung in einer Wiedergabeeinheit (47) wiedergegeben werden kann.

7. Gerät nach einem der vorhergehenden Ansprüche 2 bis 6,
**dadurch gekennzeichnet, dass** die zweite Verarbeitungseinheit (46) eine programmierbare Datenverarbeitungseinheit ist, wie z. B. eine Mikrosteuerung, welche so eingerichtet ist, dass sie mittels an der Interpretationseinheit (44) angeschlossenen Programmierwerkzeugen programmierbar ist.

8. Gerät nach einem der vorhergehenden Ansprüche 2 bis 7,
**dadurch gekennzeichnet, dass** die Interpretationseinheit (44) in einem kleinen Kasten (55) angeordnet ist, welcher in der Nähe der Eingabe- und Wiedergabeeinheit (43) in einer Tasche oder einem Beutel untergebracht werden kann.

9. Gerät nach einem der Ansprüche 2 bis 8,
**dadurch gekennzeichnet, dass** das Gehäuse (51) eine stiftförmige Hülle ist, welche z. B. die Form eines länglichen Zylinders oder eines Prismas hat.

10. Gerät nach Anspruch 9,
**dadurch gekennzeichnet, dass** das Gehäuse (51) ein vorteilhafterweise konisches Element (53), welches sich wenigstens in eine Richtung verjüngt, umfasst, wobei in Verbindung desselben die optische Eingabeeinheit (45) angeordnet ist, und an dessen Ende (54) ein vorteilhaft längliches Abtastloch (9) vorgesehen ist, durch welches grafische Schriftzeichen in das Gerät gelesen werden.

11. Gerät nach einem der vorhergehenden Ansprüche,
**dadurch gekennzeichnet, dass** die optische Eingabeeinheit (2; 45), umfasst:
- ein optisches Teil (11), welches eine Linse (19) und vorzugsweise einen Filter (21) beinhaltet;
- einen Lichtdetektor (2), welcher einen Zeilenabtaster (121), wie z. B. ein CCD-Zeilenabtaster, zur Detektierung der zu lesenden Schriftzeichendaten beinhaltet; und
- eine Beleuchtungseinheit (13) zur Beleuchtung der abzutastenden Oberfläche.

12. Gerät nach Anspruch 11,
**dadurch gekennzeichnet, dass** die Beleuchtungseinheit (13) Reflektorelemente (16) umfasst, welche innerhalb des Gehäuses (7, 51) angeordnet sind, vorteilhafterweise auf der inneren Oberfläche des spitzen Zeigeelements (71, 53) des Gehäuses (7, 51), um das Licht zu dem Abtastloch (9) zu leiten.

13. Gerät nach Anspruch 11 oder 12,
**dadurch gekennzeichnet, dass** der Lichtdetektor (12) einen Strahlteiler (20) umfasst, um die in dem Abtastloch (9) angeordnete Abtastoberfläche mit den darin enthaltenen Bildern der grafischen Schriftzeichen zu dem Zeilenabtaster (121) zu drehen, welcher in einem Winkel in Bezug auf das Abtastloch (9) positioniert ist.

14. Gerät nach einem der vorhergehenden Ansprüche 11 bis 13,
**dadurch gekennzeichnet, dass** das Abtastloch (9) asymmetrisch entlang der optischen Achse (B-B) des optischen Teils (11) und in einem spitzen Winkel in Bezug auf die optische Achse (B-B) angeordnet ist, in welchem Fall das optische Teil (11) einen Deflektor der optischen Achse umfasst, wie z. B. einen Spiegel (22), welcher in der Nähe des Abtastlochs (9) eingerichtet ist.

15. Gerät nach einem der vorhergehenden Ansprüche 11 bis 14,
**dadurch gekennzeichnet, dass** die optische Eingabeeinheit (2, 45) einen Hilfsrahmen (15) aufweist. in dem wenigstens das optische Teil (11) und die Beleuchtungseinheit (13) installiert sind.

16. Gerät nach einem der vorhergehenden Ansprüche 11 bis 15,
**dadurch gekennzeichnet, dass** das Gerät (1; 42) eine optische Distanzmesseinheit (23) zur Messung der über den Schriftzeichen zurückgelegten Abtastdistanz beinhaltet.

17. Gerät nach einem der vorhergehenden Ansprüche 11 bis 16,
**dadurch gekennzeichnet, dass** das Gerät (1; 42) eine optische Identifikationseinrichtung (30) oder Ähnliches zur Identifikation der Basis oder des Startpunktes umfasst, von dem die grafischen Schriftzeichen gelesen und die Funktionen des Gerätes (1, 42) aktiviert werden.

18. Gerät nach einem der vorhergehenden Ansprüche 11 bis 17,
**dadurch gekennzeichnet, dass** die Wiedergabeeinheit (47) eine längliche Flüssigkristallanzeige (471) oder ähnliches umfasst, welche in Verbindung mit dem Gehäuse (51) angeordnet ist.

19. Verfahren zum Lesen und Interpretieren von Zeichen und Schriftzeichen, in welchem die Zeichen und Schriftzeichen optisch gelesen werden, die gelesenen Schriftzeichendaten vorverarbeitet werden, die Schriftzeichen und/oder Schriftzeichengruppen, wie z. B. Wörter, identifiziert werden, die Schriftzeichen und/oder Schriftzeichengruppen interpretiert und auf einer geeigneten Wiedergabeeinheit wiedergegeben werden,
**dadurch gekennzeichnet, dass** das Abtasten der Schriftzeichen und die Vorverarbeitung der gelesenen Schriftzeichendaten in einer ersten Einheit (43) ausgeführt wird, welche in der Hand gehalten wird, wonach die vorverarbeiteten Schriftzeichendaten drahtlos zu einer zweiten Einheit (44) übertragen werden, wo Schriftzeichen und/oder Schriftzeichengruppen, wie z. B. Wörter, identifiziert und interpretiert werden, und die identifizierten Schriftzeichen und/oder Schriftzeichengruppen, wie z.B. Wörter, und die Übersetzung drahtlos zu der ersten Einheit (43) übertragen werden, wo sie wiedergegeben werden.

## Revendications

1. Dispositif d'analyse et d'interprétation (42) pour lire et interpréter des signes et caractères, dans lequel les signes et caractères sont lus optiquement, les données caractères lues sont prétraitées, les caractères et/ou groupes de caractères tels que des mots sont identifiés, les caractères et/ou groupes de caractères sont interprétés et affichés sur une unité d'affichage adéquate (47), **caractérisé en ce que** le dispositif d'analyse et d'interprétation (42) comprend deux unités séparées, qui sont une unité d'entrée et d'affichage (43) et une unité d'interprétation (44) en tant que dispositif externe, laquelle unité d'entrée et d'affichage (43) est une unité portative au moyen de laquelle sont effectués l'analyse des caractères et le prétraitement des données caractères lues et laquelle unité d'entrée et d'affichage (43) comprend une unité de transfert de données (48) possédant un émetteur-récepteur sans fil au moyen duquel les données caractères prétraitées sont transférées sans fil à l'unité d'interprétation (44), dans laquelle des caractères et/ou groupes de caractères, tels que des mots, sont identifiés et interprétés et les caractères et/ou groupes de caractères identifiés, tels que des mots, et la traduction sont transmis sans fil à l'unité d'entrée et d'affichage (43) pour être affichés sur l'unité d'affichage (47) de celle-ci.

2. Dispositif d'analyse et d'interprétation (42) selon la revendication 1 comprenant
- une unité d'entrée optique (45) pour effectuer une lecture optique des signes et caractères graphiques;
- une première et une seconde unités de traitement (44, 46) qui sont connectées à l'unité d'entrée optique (45) et dans lesquelles les données caractères lues sont prétraitées et interprétées ; et
- une unité d'affichage (47) pour afficher les données reçues des unités de traitement (44, 46) ;
**caractérisé en ce que** le dispositif d'analyse et d'interprétation (42) comprend deux unités séparées, qui sont une unité d'entrée et d'affichage (43) et la première unité de traitement, à savoir une unité d'interprétation (44), dans lequel
- ladite unité d'entrée et d'affichage (43) comprend ladite unité d'entrée optique (45), la seconde unité de traitement (46), l'unité d'affichage (47) et par ailleurs, une première unité de transfert de données (48) comprenant une unité de transmission (48a), qui est connectée à la seconde unité de traitement (46) afin de transférer les données caractères prétraitées à l'unité d'interprétation (44), ainsi qu'une unité de réception (48b) pour recevoir les données transmises par l'unité d'interprétation (44), ladite unité de réception (48b) étant en outre connectée à l'unité d'affichage (47) afin d'afficher la traduction, lesdites unités (45, 46, 47, 48) de l'unité d'entrée et d'affichage (43) étant installées dans un étui (51) présentant une surface de préhension adéquate (52) au niveau de laquelle elle est avantageusement tenue et maintenue lors de l'utilisation ; et
- ladite unité d'interprétation (44) comprenant en outre une seconde unité de transfert de données (49) possédant une unité de réception (49b) pour recevoir les données caractères prétraitées transmises à partir de l'unité d'entrée et d'affichage (43), et une unité de transmission (49a) pour transmettre la traduction reçue de l'unité d'interprétation (44) à l'unité d'entrée et d'affichage (43).

3. Dispositif selon la revendication 1 ou 2, **caractérisé en ce que** l'unité de transfert de données (48, 49) est une unité fonctionnant à une fréquence radio ou à la gamme de longueurs d'onde de la lumière infrarouge, par le biais de laquelle l'unité d'entrée et d'affichage (43) et l'unité d'interprétation (44) sont agencées pour communiquer entre elles sans fil.

4. Dispositif selon la revendication 1, 2 ou 3, **caractérisé en ce que** la seconde unité de traitement (46) comprend une unité de traitement de données (461), telle qu'un microcontrôleur, avec une mémoire (462) adéquate et un programme pour prétraiter les données caractères lues parmi les données reçues de l'unité d'entrée optique (45).

5. Dispositif selon la revendication 4, **caractérisé en ce que** dans l'unité de traitement de données (50) de l'unité d'interprétation (44), sont installés une ou plusieurs unités de programme (501) pour identifier les caractères et interpréter les chaînes de caractères consécutifs afin d'obtenir une traduction qui est ensuite transmise par le biais des unités de transfert de données (48, 49) à l'unité d'entrée et d'affichage (43) pour être affichée sur l'unité d'affichage (47) de celle-ci.

6. Dispositif selon la revendication 5, **caractérisé en ce que** le dispositif d'analyse et d'interprétation (42) est agencé pour traduire un premier ensemble de caractères du premier langage source, lu par l'unité d'entrée optique (43) dans le second langage cible, l'unité logicielle de traduction de langage étant dans ce cas installée dans la mémoire (57) de l'unité de traitement de données (50) dans l'unité d'interprétation (44), et **caractérisé en ce qu'**au moins la traduction dans le langage cible peut être affichée sur une unité d'affichage (47).

7. Dispositif selon l'une quelconque des revendications précédentes 2 - 6, **caractérisé en ce que** la seconde unité de traitement (46) est une unité de traitement de données programmable, telle qu'un microcontrôleur qui est agencé pour être programmé au moyen d'outils de programmation connectés à l'unité d'interprétation (44).

8. Dispositif selon l'une quelconque des revendications précédentes 2 - 7, **caractérisé en ce que** l'unité d'interprétation (44) est agencée dans un petit étui (55) qui peut être placée dans une poche ou un sac, à proximité de l'unité d'entrée et d'affichage (43).

9. Dispositif selon l'une quelconque des revendication précédentes 2 - 8, **caractérisé en ce que** l'étui (51) est une capsule en forme de stylo ayant, par exemple, la forme d'un cylindre ou d'un prisme allongé.

10. Dispositif selon la revendication 9, **caractérisé en ce que** l'étui (51) comprend un élément avantageusement conique (53) s'amenuisant dans au moins une direction, grâce auquel l'unité d'entrée optique (45) est agencée, et à l'extrémité (54) duquel se trouve un orifice d'analyse avantageusement oblong (9), à travers lequel des caractères graphiques sont lus dans la dispositif.

11. Dispositif selon l'une quelconque des revendications précédentes, **caractérisé en ce que** l'unité d'entrée optique (2 ; 45) comprend :
- une pièce optique (11) comprenant une lentille (19) et avantageusement, un filtre (21) ;
- un photodétecteur (2) comprenant un détecteur linéaire (121) tel qu'un capteur linéaire CCD, pour détecter les données caractères devant être lues ; et
- une unité d'éclairage (13) pour éclairer la surface d'analyse.

12. Dispositif selon la revendication 11, **caractérisé en ce que** l'unité d'éclairage (15) comprend des éléments réflecteurs (16) agencés à l'intérieur de l'étui (7 ; 51), avantageusement sur la surface interne du point (71 ; 53) de l'étui (7 ; 51) afin d'orienter la lumière vers l'orifice d'analyse (9).

13. Dispositif selon la revendication 11 ou 12, **caractérisé en ce que** le photodétecteur (12) comprend un séparateur de faisceau (20) pour tourner la surface d'analyse agencée dans l'orifice d'analyse (9), comportant les images des caractères graphiques, vers le capteur linéaire (121) positionné à un angle par rapport à l'orifice d'analyse (9).

14. Dispositif selon l'une quelconque des revendications précédentes 11-13, **caractérisé en ce que** l'orifice d'analyse (9) est agencé de façon asymétrique en dehors de l'axe optique (B-B) de la pièce optique (11) et à un angle aigu par rapport à l'axe optique (B-B), la pièce optique (11) comprenant dans ce cas un déflecteur de l'axe optique, tel qu'un miroir (22), installé à proximité de l'orifice d'analyse (9).

15. Dispositif selon l'une quelconque des revendications précédentes 11 - 14, **caractérisé en ce que** l'unité d'entrée optique (2 ; 45) comprend un cadre auxiliaire (15), où sont au moins installées la pièce optique (11) et l'unité d'éclairage (13).

16. Dispositif selon l'une quelconque des revendications précédentes 11 - 15, **caractérisé en ce que** le dispositif (1 ; 42) comprend une unité de mesure de distance optique (23) pour mesurer la distance d'analyse couverte sur les caractères.

17. Dispositif selon l'une quelconque des revendications précédentes 11 - 16, **caractérisé en ce que** le dispositif (1 ; 42) comprend un dispositif d'identification optique (30) ou similaire, pour identifier la base ou le point de départ à partir de laquelle (duquel) les caractères graphiques sont lus et les fonctions du dispositif (1 ; 42) sont activées.

18. Dispositif selon l'une quelconque des revendications précédentes 11 - 17, **caractérisé en ce que** l'unité d'affichage (47) comprend un écran d'affichage à cristaux liquides oblong (471) ou similaire qui est agencé en liaison avec l'étui (51).

19. Procédé de lecture et interprétation de signes et caractères, dans lequel les signes et caractères sont lus optiquement, les données caractères lues sont prétraitées, les caractères et/ou groupes de caractères tels que des mots sont identifiés, les caractères et/ou groupes de caractères sont interprétés et affichés sur une unité d'affichage adéquate, **caractérisé en ce que** l'analyse des caractères et le prétraitement des données caractères lues sont effectués par une première unité (43) qui est portative, après quoi les données caractères prétraitées sont transférées sans fil à une seconde unité (44), où des caractères et/ou groupes de caractères, tels que des mots, sont identifiés et interprétés, et les caractères et/ou groupes de caractères identifiés, tels que des mots, et la traduction sont transmis sans fil à la première unité (43), où ils sont affichés.
